(19) Europäisches Patentamt
European Patent Office
Office européen des brevets

(11) **EP 3 517 911 B1**

(12) **EUROPEAN PATENT SPECIFICATION**

(45) Date of publication and mention
of the grant of the patent:
**07.06.2023  Bulletin 2023/23**

(21) Application number: **19157454.0**

(22) Date of filing: **28.07.2014**

(51) International Patent Classification (IPC):
*G01K 7/18* *(2006.01)*          *G01K 7/14* *(2006.01)*

(52) Cooperative Patent Classification (CPC):
**G01K 7/14; G01K 7/18;** G01K 2207/06

(54) **COOKING APPLIANCE COMPRISING AN ELECTRICAL ADAPTER**

KOCHGERÄT MIT EINEM ELEKTRISCHEN ADAPTER

APPAREIL DE CUISSON COMPRENANT UN ADAPTATEUR ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**31.07.2019  Bulletin 2019/31**

(62) Document number(s) of the earlier application(s) in
accordance with Art. 76 EPC:
**14178727.5 / 2 980 549**

(73) Proprietor: **ELECTROLUX APPLIANCES
AKTIEBOLAG
105 45 Stockholm (SE)**

(72) Inventors:
• **FARALDI, Paolo
47100 Forli (IT)**
• **VALPIANI, Nicola
47122 Forli (IT)**

(74) Representative: **Electrolux Group Patents
AB Electrolux
Group Patents
S:t Göransgatan 143
105 45 Stockholm (SE)**

(56) References cited:
**DE-A1-102007 017 461      FR-A1- 2 877 085
JP-A- 2013 075 032      US-A- 4 669 049
US-A- 5 735 605      US-A1- 2007 268 957**

• **Anonymous: "Hypodermic Probe Type K 2.25
inch", , 18 February 2009 (2009-02-18),
XP055593900, Retrieved from the Internet:
URL:https://web.archive.org/web/2009021805
3247/https://www.jbprince.com/utensils/hyp
odermic-probe-type-k-2.25-inch.asp [retrieved
on 2019-06-04]**

## Description

The present invention relates to a system comprising a cooking appliance and temperature probes according to claim 1.

Sous-vide cooking is a well-established technique for professional cooks that is growing in popularity and application also for the private households. Sous-vide is French for "under vacuum" and describes a method of cooking in vacuum sealed plastic pouches at low temperatures for long times. However, sous-vide typically comprises of three stages: preparing for packaging, cooking and finishing, wherein particularly a uniform heating during cooking is desired and thus a relatively tight temperature control is desired. A typical sous-vide cooking cycle comprises the steps of heating, wherein a temperature target should ideally be reached with no or minimum overshoot (< 2 °C) for oven centre temperature; and maintenance, wherein the heat input in the cavity (hence of the food) is controlled, e.g. by controlling the activation of a steam generator.

In order to meet the requirement of a relatively tight temperature control of the oven cavity and, particularly the piece of food contained therein, food probes have been established as a standard accessory for sous-vide cooking and other conventional cooking methods. Such temperature probes, especially in connection with high end ovens, are provided to perform an assisted cooking using the temperature measured by the respective probe to terminate the cooking process, adjust the temperature and/or cooking cycle or the like.

Basically, such food probe is plugged into the related socket by the user, preferably in the oven front, and afterwards the needle of the probe is inserted into the food to be cooked. Finally, the requested function is chosen, e.g., the oven set temperature (OST) and/or the food probe set temperature (FST). Depending on the function selected, the system in general performs a continuous measurement of the temperature using the food probe and, usually dependent on the temperature read from the food probe, the cooking process will be adapted according to this data, e.g., by changing the heating setup or switching off the oven when the food probe measures the user temperature, or the like.

For conventional oven appliances a food probe needle is known with a diameter of about 3.7 mm with an NTC- or so called "negative temperature coefficient"-sensor due to measure the temperature, basically a resistor reducing its resistance value when the temperature rises. However, there is a problem when using such probe for sous-vide cooking, particularly because the diameter of the needle is too big and will not preserve a vacuum in the bag containing the piece of food to be cooked.

Therefore, and in order to use a food probe in sous-vide application a special type of food probe is known having a smaller diameter of about only 1.05 mm. Additionally, probe pads are usually used assisting the preservation of the vacuum in the sous-vide bag. Contrary to the NTC-sensor probes and due to their relatively small diameter, such sous-vide probes use thermocouples to measure the temperature, producing a voltage when the temperature is raised.

According to Ohm's law, according to which the current passing through a conductor between two points is directly proportional to the potential difference across the two points, wherein using the resistance as a constant of proportionality, said relationship is described as potential difference is current multiplied with resistance.

According to the NTC sensor usually used as a standard food probe, the temperature of the probe is detected as resistance value or ohmic value, whereas according to the thermocouples sensors usually used as a probe for sous-vide cooking the temperature of the probe is detected as a voltage value.

It will also be understood that in both applications outlined above an electronic control is used to detect the temperature of the probe by measuring an analog voltage signal.

Those measures are easily done by using analog to digital converter, also referred to herein as ADC, channels of many commonly used microcontrollers. However, each measure needs a specific circuit in order to interface the sensor with the electronic control.

However, the basic problem is that the system designed to work with the standard food probe cannot work with the sous-vide one and vice versa, and thus there is a problem in that it is not possible to work with both probe settings without duplicating the input stage of such system.

The document FR 2 877 085 A describes a temperature sensor with an analog-to-digital converter, which allows for a wireless transmission of the signal. However, this document does not disclose a solution to the above problems.

US 5 735 605 A discloses an electrical adaptor for a temperature sensor which converts an analog input signal provided by a thermistor into an analog output signal which is compatible with the output of a thermocouple.

The document US 5 705 792 A1 describes a temperature sensing system, which includes a temperature probe and a signal conditioning circuit. The circuit converts the resistance measurements from the oven thermometer into a voltage and amplifies the signal for interpretation by a microprocessor. However, the digitalization of a signal supplied by a resistance thermal detector is widely used and does also not solve the above problems.

It is an object of the present invention to provide a fully flexible food probe management system allowing to adopt the desired sensor for each situation.

It is a further object to provide a system comprising a cooking appliance, in particular an oven, allowing the oven appliance to be unchanged in the case of sous-vide cooking is designed to be used.

It is a still further object of the present invention to provide an electrical adapter and/or a temperature probe allowing the use of the existing system, i.e. a cooking appliance, particularly an oven, and control electronic thereof, with the sous-vide food probe.

The above objects of the invention are achieved by a system comprising a cooking appliance, in particular an oven, and temperature probes according to the combination of features of claim 1.

The system according to claim 1 comprises a cooking appliance, a first temperature probe being an NTC probe, a second temperature probe for sous-vide cooking and an electrical adapter. The cooking appliance comprises a signal input configured to receive a signal that originates from a temperature measurement performed either by the first temperature probe or by the second temperature probe, which second temperature probe comprises a thermocouple. The second temperature probe has a needle diameter much smaller than the needle diameter of the first temperature probe. The electrical adapter comprises

a) an electrical signal input connected to the second temperature probe and configured for receiving at least one analog voltage input signal from the second temperature probe, particularly a mean thermometer,

b) an electrical signal output for providing an analog voltage output signal to the cooking appliance, particularly a kitchen stove, and

c) an electrical signal converter for converting the input signal to the output signal, the electrical signal converter being connected to both the electrical signal input and the electrical signal output and configured such that the output signal is inversely proportional to the input signal.

The thermocouple is configured for providing an analog voltage input signal proportional to the ambient temperature of the second temperature probe. The signal, the cooking appliance is configured to receive, is preferably a resistance value or a related voltage drop. The electrical adapter is configured to adapt the at least one analog voltage input signal from the temperature sensor to the signal input of the cooking appliance. The electrical adapter may be included in the second temperature probe. The signal input is electrically connected to the thermocouple. Moreover, the electrical signal output is for providing an analog voltage output signal to the cooking appliance in that the signal converter is electrically connected to both the signal input and the signal output and configured such that the output signal is inversely proportional to the input signal. Such electrical adapter is based on the concept of creating the same behavior of a standard food probe or NTC-probe using sous-vide food probe, comprising a temperature sensor that is a thermocouple, while using a small circuit.

This electrical adapter can be realized, for example, integrally with the jack of such food probe. In an alternative embodiment, space is saved as such electrical adapter circuit is directly laced onto the food probe wire. This is generally possible, as the maximum operating temperature for sous-vide cooking is usually less than 100°C and, moreover, preferably, components can be applied having an extended range of temperature to, more preferably up to 125°C.

It will be immediately understood by a person skilled in the art that, for example, such electrical adapter reads a voltage value as an analog voltage input signal supplied by a temperature sensor, e.g. a thermocouple, first, and then select a value corresponding to the lowest temperature and convert it in the equivalent output signal, also referred to herein, preferably, as resistance value (ohm), provided if a standard probe with NTC was used instead of such thermocouple.

Another solution can be to generate this voltage drop using a resistance capacitor circuit driven by a PWM (pulse width modulation) signal avoiding to connect a resistance value.

Moreover, said value will, preferably, feed the oven electronic control with a coherent value, which advantageously allows using the current oven control system with standard or sous-wide food probe, respectively.

It will also be understood that such cooking appliance, in particular an oven, comprising an electrical adapter and/or such electrical adapter, in order to keep the existing oven control system as it is, has an electrical signal input for receiving an analog voltage input signal from a temperature sensor, particularly a meat thermometer, e.g. has to read the thermocouples signals as input signal, and further comprises an electrical signal converter for converting the input signal to the output signal, the signal converter electrically connected to both the signal input and the signal output and configured such that the output signal is inversely proportional to the input signal. In other words, this signal is elaborated and the corresponding value of resistance for an equivalent NTC is evaluated. Moreover, an analog voltage output signal is provided by an electrical signal output to an appliance, particularly a kitchen stove, e.g. by presenting a physical ohmic resistance as output.

The electrical adapter as used in the system of the present invention comprises a circuit which is able to read a voltage input value supplied by a thermocouple, representing a certain temperature and convert said voltage input value into a corresponding output signal, e.g. a resistance value.

It will be understood that this provides the possibility to use a standard food probe, such as NTC probe, and a sous-vide food probe, such as a thermocouple sensor with much smaller probe diameter, at the same stove. Preferably, the signal converter or conversion circuit reads the signal from e.g. the thermocouple chooses a corresponding output signal, e.g. resistance value of an equivalent NTC probe or the related voltage drop and presents the household appliance with a representative voltage output signal, e.g. ohmic resistance or the related voltage drop. The appliance then preferably uses this voltage output signal to control the cooking program, as if a NTC probe was used.

Such conversion circuit could be integrated into an adapter or the plug of the oven probe. The circuit might be self-powered, such as by harvesting energy within the heated oven, for example using a thermoelectric effect, preferably using a thermo element, thermocouple, Peltier element, Seebeck element or the like, or by means of a regular battery, or use the existing circuit on the oven's control board to drain energy. In the latter case, basically the concept is to use the pull up resistor that connects the control board to the standard NTC probe to drain current.

A thermocouple as used herein preferably comprises two dissimilar conductors contacting each other at least one spot. More preferably such thermocouple produces a voltage when a temperature of one of the at least one spots differs from a reference temperature at other parts of the circuit. Such thermocouples are a generally acknowledged and widely used type of temperature sensor for measurement and control, and are also able to convert a temperature gradient into electricity.

In a further preferred embodiment, an electrical adapter according to the present invention is located and/or fits in the socket used to plug the current probe.

In an advantageous embodiment of the inventive system, the cooking appliance and/or the electrical adapter is for use in a low temperature cooking appliance, preferably for sous-vide cooking.

The cooking appliance and/or the electrical adapter may be used in a low temperature cooking method, preferably sous-vide cooking method.

In an advantageous embodiment of the inventive system, the electrical adapter further comprises a thermoelectric generator for generating electrical energy based on a thermoelectric effect, particularly the Seebeck effect. In an advantageous embodiment of the inventive cooking appliance the thermoelectric effect is a Peltier effect.

In connection therewith it will be understood that an electric adapter according to the present invention preferably is self-powered, as a food probe might not be power supplied per se.

The Peltier effect as used herein, preferably means the presence of heating or cooling at an electrified junction of two different conductors. It will be understood, that when a current is made to flow through a junction between two conductors, heat may be generated, or removed, at the junction.

The Seebeck effect, as used herein, preferably refers to the conversion of temperature differences directly into electricity. The Seebeck effect, more preferably is an example of an electromotive force, also referred to herein as emf, which leads to measurable currents or voltages. In connection therewith, it should be acknowledged that the Seebeck effect modifies Ohm's law by generating currents even in the absence of voltage differences or vice versa.

Thereby the local current density is given by the following equation

$$\mathbf{J} = \sigma\left(-\boldsymbol{\nabla}V + \mathbf{E}_{\mathrm{emf}}\right),$$

wherein

$V$ is the local voltage
and $\sigma$ is the local conductivity.

In general, the Seebeck effect may be, preferably, described locally by the creation of an electromotive field according to the following equation

$$\mathbf{E}_{\mathrm{emf}} = -S\boldsymbol{\nabla}T,$$

wherein
$S$ is the Seebeck coefficient, a property of the local material, and wherein $\nabla T$ is the gradient in temperature $T$. The Seebeck coefficients generally vary as function of temperature, and depend on the composition of the conductor.

However, it is within the present invention that a person skilled in the art will according to the desired effect and application vary and choose the specific arrangement of the conductors and/or the composition of the conductors accordingly.

In an advantageous embodiment of the inventive system, the electrical adapter further comprises an electric battery for storing electrical energy or configured to be connected to the control board, draining power from the measuring circuit without any influence on the measured value.

In an advantageous embodiment of the inventive system, the electrical adapter further comprises a circuit able to drain power from the oven control board, especially from the circuit design to measure the resistance value of the NTC.

Any energy harvesting system may in general be applied in connection with the cooking appliance and/or the electrical adapter according to the present invention, which, preferably, is able to supply the circuit without or in addition to a conventional energy source like a battery or external power supply, e.g. a pyroelectric energy harvesting and/or a thermoelectric energy harvesting.

It will be understood that using and power supply independent from an appliance structure, such as an oven structure, or appliance power supply, such as an oven power supply, it is possible to realize the cooking appliance comprising an electrical adapter and/or the electrical adapter without any changes in the existing appliance control system, e.g. an oven control system. It will be understood that such electric battery for storing electrical energy, preferably, may be present in addition to or instead of a thermoelectric generator.

The electrical adapter may be configured such that the battery releases the electrical energy or the system starts to drain energy from control board when the signal output is connected to the appliance. In other words, to reduce the power consumption, e.g. a battery cell preferably supplies the electrical adapter only if the probe is plugged in the oven.

In connection therewith a microcontroller as described herein, preferably is a low-power type microcontroller.

In a further advantageous embodiment of the inventive system, the electrical adapter further comprises a resin shell to house the converter, wherein the signal input and the signal output penetrate the resin shell.

It will be understood that in case the complete circuit is sealed in a resin shell, preferably an ingress or IP protection rating is enhanced.

In a further advantageous embodiment of the inventive system, the resin shell is formed such as to mechanically connect to a socket of the second temperature probe when the signal input is electrically connected to the second temperature probe.

In a further advantageous embodiment of the inventive system, the electrical adapter further comprises an operational amplifier for amplifying the input signal, wherein the signal converter is electrically connected to the signal input via the amplifier.

It will be understood, that a signal input stage can be composed by a complex instrumentation amplifier. Preferably, at least a simple operational amplifier is used due to amplify the signal from at least 10-fold to 100-fold, preferably 10-fold or 100-fold, in order to raise the signal noise ratio and in order to feed the signal converter, e.g. elaboration block with a better signal.

In a further advantageous embodiment of the inventive system, the electrical adapter further comprises a signal processing circuit for filtering and/or elaborating the input signal, keeping it in an analog form or converting it into a digital form, wherein the signal converter is electrically connected to the signal input via the-signal processing circuit.

In a further advantageous embodiment of the inventive system, the electrical adapter further comprises a passive electronic filter for filtering the input signal, wherein the signal converter is electrically connected to the signal input via the filter.

It will be also understood, that a signal input stage can be downgraded to a passive filter to reduce the noise according to the ADC of the microcontroller in the signal converter. Preferably, at least a simple operational amplifier is used due to amplify the signal from at least l0-fold to 100-fold, preferably 10-fold or 100-fold, in order to raise the signal noise ratio and in order to feed the signal converter, e.g. elaboration block with a better signal.

An ADC, also referred to herein as an analog-to-digital converter preferably is a device capable of converting a continuous physical quantity, e.g. a voltage, to a digital number that represents the quantity's amplitude.

In a further advantageous embodiment of the inventive system, the electrical signal converter comprises a microcontroller for controlling the output signal in response to the input signal. In a further advantageous embodiment of the inventive system, the electrical adapter comprises an amplifier, which is configured such that the input signal is amplified in the electrical signal input in that way, that the signal, which is fed to the electrical signal converter ranges from about 1.2 mV to about 4 mV.

In an advantageous embodiment of the temperature probe as used in the system according to the present invention, said probe comprises a probe plug to interface the probe with an appliance and/or a probe handle to handle the probe by the user. Preferably, the probe plug and/or the probe handle comprises the electrical adapter and/or at least a part thereof and/or at least a part of an electronic circuit thereof. The probe handle, preferably is manufactured from a heat resistant material. This allows the user to safely touch the temperature probe without risking to be burned.

In an advantageous embodiment of the second temperature probe as used in the system according to the present invention, the second temperature probe takes the form of a meat thermometer.

The temperature probe as used in the system according to the present invention comprises a needle, preferably said needle being suitable for inserting said needle into a food stuff, such as a piece of meat. Such said needle, preferably, comprises at least a part of the electrical adapter, more preferably, said needle comprises a circuit which is able to read a voltage input value supplied, e.g. a thermocouple.

Advantageously, such temperature probe, more particularly a needle of such temperature probe, can be inserted into the food stuff through a pouch or bag, e.g. vacuum bag, and can be provided to determine the temperature of the food stuff directly. In a preferred embodiment the temperature probe according to the system of the present invention comprises a vacuum preservation. To prevent gas or liquid from entering the punctured bag, the food probe can be inserted through said vacuum preservation, e.g. a pad or, tape or cushion, e.g. a closed cell foam tape, e.g. of neoprene or polychloroprene. It will be immediately understood that such pad or, tape or cushion is capable to self-repair the punctured pouch.

In a preferred embodiment the needle of the temperature probe according to the system of the present invention comprises a sharp end, preferably at its tip. Such sharp end allows an easy injection of said needle into a food stuff and/or through a vacuum bag.

In an advantageous embodiment of the temperature probe as used in the system according to the present invention, the temperature probe is for use in a low temperature cooking appliance, preferably for sous-vide cooking.

In a further advantages embodiment of the temperature probe as used in the system according to the present invention, the temperature probe is for use in a low temperature cooking method, preferably sous-vide cooking method.

It will be understood that the inventive temperature probe can preferably be inserted into the food stuff, e.g. piece of meat, also through a vacuum sealed pouch. To prevent gas or liquid from entering the punctured bag, the food probe can preferably be inserted through, e.g. a closed cell foam tape, capable to self-repair the punctured pouch.

All described embodiments of the invention have the advantage, that use of the existing system, i.e. oven and control electronic is allowed with both, a standard food probe and the sous-vide food probe. It will be immediately understood, that this approach moves the cost for a sous-vide application from the oven appliance to the food probe itself allowing to provide a "standard oven" with a common food probe and further provide as an alternative equipment the special sous-vide food probe.

The present inventors have surprisingly found that the system according to the present invention provides a way to use both probes in a current oven system without any changes required, and moreover allow the complete reuse of such existing system and allow for a flexible food-probe sensor selection, an NTC to thermocouple converter circuit, an automatic probe type recognition and an energy harvesting system for power supply.

The present invention will be described in further detail with reference to the drawings, in which

FIG 1    illustrates a block diagram of an electrical adapter showing a first inventive embodiment;

FIG 2    illustrates a schematic drawing of in a meat probe tool comprising an electrical adapter according to the first inventive embodiment;

FIG 3    illustrates a schematic drawing of a part of a kitchen appliance and a meat probe tool comprising an electrical adapter according to the first inventive embodiment;

FIG 4    illustrates a block diagram of an electrical adapter showing a second inventive embodiment; and

FIG 5    illustrates a block diagram of an electrical adapter showing a third inventive embodiment.

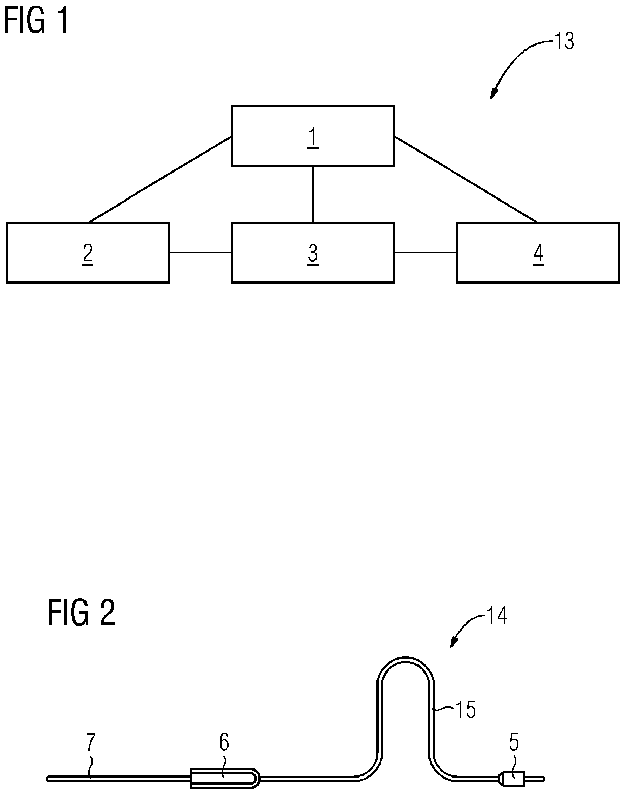

FIG 1 shows a block diagram of an electrical adapter 13 according to the present invention.

Such electrical adapter 13 according to the present invention comprises an electrical signal input 2 for receiving an analog voltage input signal from a temperature sensor, e.g. an input stage 2, also referred to herein as an "analog input stage", allowing to read a thermocouple 16, particularly a meat thermometer. Of course, the system can have more than one sensor (e.g. thermocouple) connected so this stage has to be able to handle all of them. The complexity of this part can be trimmed depending on the signal convertor 3, also called herein the elaboration part, or in order to take over the task of analog reading, sending the digitized information to the elaboration part to split the complexity between these two devices, supervising the whole adapter. Its main tasks are:

- measure the analog value of the input signal (e.g. thermocouple) or get the digitized information from the input stage 2
- Manage the power supply 1 switching off the system to save power
- Control the output stage 4 in order to generate the appropriate output value.

Such adapter 13 further comprises an electrical signal output 4 for providing an analog voltage output signal to an appliance 12. As described in the input stage 2, the complexity of this stage can be trimmed in order to remove it from the elaboration part 3 to allow using a resistor net or digital potentiometer or resistance capacitor circuit capable of generating the correct analog voltage according to the management implemented on the elaboration unit 3. Particularly a kitchen stove, and the elaboration unit or microcontroller 3 for converting the input signal to the output signal, in order to manage them, the signal converter 3 electrically connected to both the signal input 2 and the signal output 4, as depicted by the connecting lines in FIG 1, and configured such that the output signal is inversely proportional to the input signal.

It will be immediately understood by a skilled person, that the system can advantageously be connected to more than one input.

The signal input or inputs 2, e.g. the signal input stage for a thermocouple 16, can be composed by a complex instrumentation amplifier or can be downgraded to a passive filter to reduce the noise according to the ADC of the microcontroller in the signal converter 3. Preferably, at least a simple operational amplifier is used due to amplify the signal from at least 10-fold to 100-fold, preferably 10-fold or 100-fold, in order to raise the signal noise ratio and in order to feed the signal converter 3, e.g. elaboration block with a better signal.

Another option is to increase the complexity of this system, thus reducing the complexity of the signal converter, which will obtain the digitized information of the input analog value without any complex measurement.

The signal converter 3, preferably, comprises a microcontroller for controlling the output signal in response to the input signal. In other words, the signal converter 3 preferably is composed by a microcontroller identifying a lowest temperature measured by e.g. the thermocouples 16 and performs the conversion between the voltage value and the resistance value. It will be understood that such microcontroller preferably has an internal ADC capable to read the thermocouples 16 signals or a communication bus to exchange data with a smarter signal input stage 2.

It will also be understood, if a simple input stage is used, that focusing on the measurement in the microcontroller using a high performances ADC is possible, preferably using and/or managing a voltage of about 40 μV/°C fixing the range of between minimum about 1200 μV, preferably for 30°C, to a maximum value of about 4000 μV, preferably for 100°C. In order to fulfill this requirement the microcontroller preferably has to be equipped with a high performance ADC.

In connection therewith, it is to be understood that preferably an amplification of the signal in the input stage 2 will reduce the performance required by ADC. As an example, at least a simple amplifier as described herein used with the right circuit is preferred and allows the use of a less cost intensive microcontroller having, preferably a standard ADC. In accordance therewith, it will be understood that preferably said solution advantageously moves the costs from the microcontroller to the signal input stage 2.

The microcontroller preferably is configured such that the input signal ranges from 1.2 mV to 4 mV. More preferably, the microcontroller is further configured such that the input signal increases by the related voltage value according with the Seebeck effect when the input signal indicates a temperature increase of 1 °C.

An inventive adapter 13 according to the present invention preferably further comprises a power supply 1, more preferably an electric battery 1, or a system able to drain current from the measuring circuit in the power board without any influence on the analog measurement, for storing electrical energy.

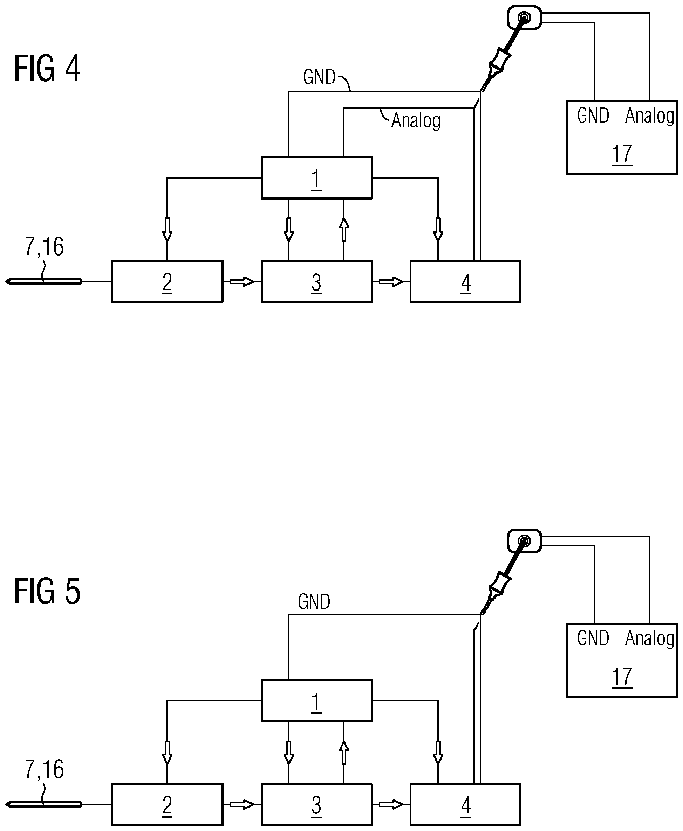

FIG 4 and FIG5 represent a system overview block diagram for each of said possibilities.

More particularly, FIG 4 shows an overview for power supply from the control board 17 and FIG 5 shows an overview for power supply from a battery, here reflecting also the energy harvesting.

Particularly, a battery-less approach is preferred that supplies the electrical adapter 13.

An inventive adapter 13 preferably is configured such that the battery releases the electrical energy when the signal output is connected to the appliance. In other words, to reduce the power consumption, e.g. a battery cell preferably supplies the electrical adapter 13 only if the probe is plugged in the oven.

In connection therewith a microcontroller as described herein, preferably is a low power type microcontroller.

In an advantageous embodiment of the inventive adapter 13, the adapter 13 further comprises a pyroelectric element.

Any energy harvesting system may in general be applied in connection with the electrical adapter 13 according to the present invention which is able to supply the circuit without or in addition to a conventional energy source like a battery 1 or external power supply 1, e.g. a pyroelectric energy harvesting and/or a thermoelectric energy harvesting.

Using an independent power supply 1 it is, of course, possible to realize the circuit and/or electrical adapter 13 without any changes in the existing oven control system

A signal output stage 4 is, preferably composed by a digital potentiometer driven by e.g. a microcontroller according to the required resistance value.

It will be understood that an output signal as used herein, preferably defines such resistance value.

Such signal output stage 4 preferably comprises a serial bus allowing e.g. a microcontroller to control a chip, and more preferably, a variable resistor able to regulate a resistance from about 0 to about 50K ohm, more preferably with 1024 steps according to the value transmitted by such microcontroller. This preferably reflects a minimum resolution of 48 ohm while the NTC characteristic need a minimum increment of 135 ohm.

Another approach is to increase the complexity of this stage using a resistance/capacitor circuit manipulated by a pulse width modulated signal generated by the microcontroller 2, in order to create the correct voltage representing the voltage dropped on the equivalent NTC resistor.

This solution is the best choice if the power supply 1 drains power from the control board 17 measuring circuit.

By way of an example of such circuit and /or electrical adapter 13 a thermocouple 16 in a needle detects a temperature of e.g. 60°C reflecting a voltage of 2400 uV, i.e. 2.4 mV. Accordingly, the input signal stage raises said value one hundred times to accordingly 240mV, Moreover, the signal converter converts said input signal to an output signal, i.e. the corresponding resistance value for 60°C being 12140 ohm. Sending said value to a digital potentiometer, the most similar value to 12140 ohm with a step of 48 ohm is e.g. 12109. The digital potentiometer thus regulates the output resistance to 12109.

Such electrical adaptor 13 according to the present invention is advantageously placed in a temperature probe 14 for a cooking appliance 12, preferably an oven. The electronic circuit of the electrical adapter 13 as described by the block diagram in Fig 1 is advantageously placed in a probe plug 5 and/or a probe handle 6 of said temperature probe 14.

Such temperature probe 14 according to the present invention is schematically shown in FIG. 2 and comprises a temperature sensor for providing an analog voltage input signal proportional to an ambient temperature of the temperature probe and the electrical adapter 13 according to the first inventive embodiment for adapting the temperature sensor to the appliance 12, the signal input 2 electrically connected to the temperature sensor, wherein the cooking appliance 12, more preferably, is a cooking appliance according to the present invention.

The temperature sensor comprises some thermocouples 16, here located in the probe needle 7, the probe needle having the form of a meat thermometer and being equipped with a probe handle 6. Said handle 6 is connectable to an appliance 12 via a probe wire 15 and a probe plug 5 at the free end of the probe wire 15.

The handle of the probe 6 may comprise or form a housing comprising electronic elements of the adapter 13. Accordingly, such handle 6 may comprise a power supply 1, e.g. battery, or at least a part thereof, a signal input 2, e.g. an input stage for thermocouple, or at least a part thereof, a signal converter 3, e.g. a microcontroller 3, or at least a part thereof, and a signal output 4, variable resistor or at least a part thereof.

In connection therewith it will be immediately understood that also the plug 5 may form a housing and may further comprise parts of the electronic elements of the adapter 13.

Accordingly, all major elements may be advantageously comprised by the handle 6 and/or by the plug 5.

In connection therewith it is of particular advantage that the probe plug 5 comprises the power supply 1 and/or at least parts of a power supply circuit. Further parts of the power supply 1 and/or the power supply circuit may be comprised in the handle 6.

It is also of advantage that the plug located at the end of the wire 15 forms a connector to interface the probe with an appliance 12, such as an oven, e.g. as a power board connection.

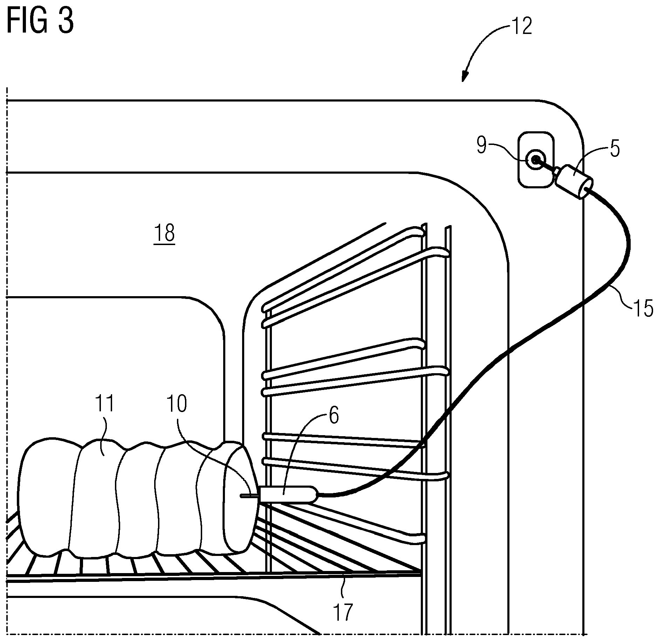

Such temperature probe 14 may be connected to an appliance 12 according to the present invention as shown in Fig. 3.

Here, the appliance 12, particularly is an appliance, such as an oven, for low temperature cooking and/or for sous-vide cooking, the appliance 12 comprising a cavity 18 in which a rack 17 is placed. On said rack 17 a good, here food stuff vacuum packed in a vacuum bag 11 is placed, preferably in a defined position, in the cavity 18.

The temperature probe 14 is guided through the packaging of said food stuff 11. By inserting the needle 7 at a needle insertion point 10 into the vacuum bag 11, the needle being injected into the food stuff and/or being in direct contact to said food stuff. This allows to measure the temperature of said food stuff without opening the vacuum bag 11.

As shown in Fig. 3 the temperature probe 14 is to be connected with the appliance 12 by inserting the probe plug 5 into an appliance socket 9.

With the above setting the inventive method for electrically adapting a temperature sensor to a cooking appliance 12, preferably an oven, may be carried out comprising a step of receiving an analog voltage input signal from the temperature sensor, a step of converting the input signal to an analog voltage output signal inversely proportional to the input signal, and providing the output signal to the cooking appliance 12.

This particularly allows to control the temperature of a food stuff placed in said oven for cooking.

With the cooking appliance and the second temperature probe as comprised by the system according to the present invention a cooking method, preferably a low temperature cooking method, more preferably a sous-vide cooking method, may be carried out, the method comprising at least the following steps: placing a good, preferably a packed food stuff 11, more preferably a vacuum packed food stuff 11, in a cavity 18 of an appliance 12, the appliance being, preferably, for low temperature cooking, more preferably for sous-vide cooking. A temperature probe 14 is placed or arranged in the cavity 18 of the appliance, preferably by a step of inserting the temperature probe 14 into the food stuff. The method further comprises a heating step comprising heating up the cavity 18 until the cavity center has reached a defined temperature, e.g. by heating water to the defined temperature and ejecting the water from a water ejection means into the cavity 18 ; a maintaining step comprising maintaining said cavity 18 at said defined temperature of the cavity center, e.g. by heating water to the defined temperature and ejecting the water into the cavity 18, over a certain period of time while said defined temperature of the cavity center, preferably, is not allowed to vary more than +/- 1,5°C; wherein at least during said heating step and said maintaining step the actual temperature of the cavity center is determined by a control unit of the appliance 12 by means of an algorithm that is based on the temperature values measured by the temperature probe 14 within the cavity 18 and wherein said actual temperature is used to operate a heating unit such, that said defined temperature of the cavity center is reached or maintained.

**Claims**

1. A system comprising

   - a cooking appliance (12), in particular an oven,
   - a first temperature probe,
   - a second temperature probe (14) for sous-vide cooking,
   - an electrical adapter (13),

   wherein

   - the cooking appliance (12) comprises a signal input configured to receive a signal that originates from a temperature measurement performed either by the first temperature probe or by the second temperature probe (14),
   - the first temperature probe is an NTC probe,
   - the second temperature probe (14) comprises a thermocouple (16), and

- the second temperature probe (14) has a needle diameter much smaller than the needle diameter of the first temperature probe,
- the electrical adapter (13) comprises

a) an electrical signal input (2) connected to the second temperature probe (14) and configured for receiving at least one analog voltage input signal from the second temperature probe (14),
b) an electrical signal output (4) for providing an analog voltage output signal to the cooking appliance (12),
c) an electrical signal converter (3) connected to both the electrical signal input (2) and the electrical signal output (4) and configured such that the output signal is inversely proportional to the input signal.

2. The system according to claim 1, the electrical adapter (13) further comprising a thermoelectric generator for generating electrical energy based on a thermoelectric effect, particularly the Seebeck effect.

3. The system according to claim 1 or 2, the electrical adapter (13) further comprising an electric battery (1) for storing electrical energy or configured to be connected to a control board (17), draining power from the measuring circuit without any influence on the measured value.

4. The system according to claim 3, wherein the electrical adapter (13) is configured such that the battery (1) releases the electrical energy or comprises a system, which starts to drain energy from the control board (17) when the signal output (4) is connected to the cooking appliance (12) .

5. The system according to any of the preceding claims, wherein the electrical adapter (13) further comprises a resin shell to house the electrical signal converter (3), wherein the electrical signal input (2) and the electrical signal output (4) penetrate the resin shell.

6. The system according to claim 5, wherein the resin shell is formed such as to mechanically connect to a socket of the second temperature probe (14) when the electrical signal input (2) is electrically connected to the second temperature probe (14).

7. The system according to any of the preceding claims, wherein the electrical adapter (13) further comprises an operational amplifier for amplifying the input signal, wherein the electrical signal converter (3) is electrically connected to the electrical signal input (2) via the amplifier.

8. The system according to any of the preceding claims, wherein the electrical adapter (13) further comprises signal processing circuit for filtering and/or elaborating the input signal, keeping it in an analog form or converting it into a digital form, wherein the electrical signal converter (3) is electrically connected to the electrical signal input (2) via the signal processing circuit.

9. The system according to any of the preceding claims, wherein the electrical signal converter (3) comprises a microcontroller for controlling the output signal in response to the input signal.

10. The system according to claim 9, wherein the electrical adapter (13) comprises an amplifier, which is configured such that the input signal is amplified in the electrical signal input (2) in that way, that the signal, which is fed to the electrical signal converter (3) ranges from about 1.2 mV to about 4 mV.

11. The system according to any of the preceding claims, wherein the signal converter (3) comprises a microcontroller for controlling the output signal in response to the input signal, and wherein the microcontroller has an internal AD converter capable to read signals from the thermocouple (16) connected to the electrical signal input (2).

12. The system according to any of the preceding claims, wherein the second temperature probe (14) takes the form of a meat thermometer.

**Patentansprüche**

1. System, das Folgendes umfasst:

- ein Kochgerät (12), insbesondere einen Backofen,
- einen ersten Temperaturfühler,
- einen zweiten Temperaturfühler (14) für Sous-vide-Garen,
- einen elektrischen Adapter (13),

wobei:

- das Kochgerät (12) einen Signaleingang aufweist, der so ausgebildet ist, dass er ein Signal empfängt, das von einer Temperaturmessung stammt, die entweder vom ersten Temperaturfühler oder vom zweiten Temperaturfühler (14) durchgeführt wird,
- der erste Temperaturfühler ein NTC-Fühler ist,
- der zweite Temperaturfühler (14) ein Thermoelement (16) umfasst, und
- der zweite Temperaturfühler (14) einen Nadeldurchmesser hat, der wesentlich kleiner als der Nadeldurchmesser des ersten Temperaturfühlers ist,
- der elektrische Adapter (13) Folgendes umfasst:

a) einen elektrischen Signaleingang (2), der mit dem zweiten Temperaturfühler (14) verbunden und für den Empfang mindestens eines analogen Spannungseingangssignals vom zweiten Temperaturfühler (14) konfiguriert ist,
b) einen elektrischen Signalausgang (4) zur Bereitstellung eines analogen Spannungsausgangssignals für das Kochgerät (12),
c) einen elektrischen Signalwandler (3), der sowohl mit dem elektrischen Signaleingang (2) als auch mit dem elektrischen Signalausgang (4) verbunden und so konfiguriert ist, dass das Ausgangssignal umgekehrt proportional zum Eingangssignal ist.

2. System nach Anspruch 1, wobei der elektrische Adapter (13) ferner einen thermoelektrischen Generator zur Erzeugung elektrischer Energie auf der Grundlage eines thermoelektrischen Effekts, insbesondere des Seebeck-Effekts, umfasst.

3. System nach Anspruch 1 oder 2, wobei der elektrische Adapter (13) außerdem eine elektrische Batterie (1) zur Speicherung von elektrischer Energie umfasst oder so ausgebildet ist, dass er an eine Steuerplatine (17) angeschlossen werden kann, die dem Messkreis ohne Einfluss auf den Messwert Energie entzieht.

4. System nach Anspruch 3, wobei der elektrische Adapter (13) so ausgebildet ist, dass die Batterie (1) die elektrische Energie abgibt oder ein System umfasst, das bei Anschluss des Signalausgangs (4) an das Kochgerät (12) beginnt, Energie aus der Steuerplatine (17) zu entnehmen.

5. System nach einem der vorhergehenden Ansprüche, wobei der elektrische Adapter (13) ferner eine Kunstharzschale zur Aufnahme des elektrischen Signalwandlers (3) umfasst, wobei der elektrische Signaleingang (2) und der elektrische Signalausgang (4) die Kunstharzschale durchdringen.

6. System nach Anspruch 5, wobei die Kunstharzschale so geformt ist, dass sie sich mechanisch mit einer Buchse des zweiten Temperaturfühlers (14) verbindet, wenn der elektrische Signaleingang (2) elektrisch mit dem zweiten Temperaturfühler (14) verbunden ist.

7. System nach einem der vorhergehenden Ansprüche, wobei der elektrische Adapter (13) ferner einen Operationsverstärker zur Verstärkung des Eingangssignals aufweist, wobei der elektrische Signalwandler (3) über den Verstärker mit dem elektrischen Signaleingang (2) elektrisch verbunden ist.

8. System nach einem der vorhergehenden Ansprüche, wobei der elektrische Adapter (13) ferner eine Signalverarbeitungsschaltung zur Filterung und/oder Aufbereitung des Eingangssignals umfasst, die das Signal in einer analogen Form hält oder in eine digitale Form umwandelt, wobei der elektrische Signalwandler (3) über die Signalverarbeitungsschaltung mit dem elektrischen Signaleingang (2) elektrisch verbunden ist.

9. System nach einem der vorhergehenden Ansprüche, wobei der elektrische Signalwandler (3) einen Mikrocontroller zur Steuerung des Ausgangssignals in Abhängigkeit von dem Eingangssignal umfasst.

10. System nach Anspruch 9, wobei der elektrische Adapter (13) einen Verstärker umfasst, der so ausgebildet ist, dass das Eingangssignal im elektrischen Signaleingang (2) so verstärkt wird, dass das Signal, das dem elektrischen Signalwandler (3) zugeführt wird, im Bereich von etwa 1,2 mV bis etwa 4 mV liegt.

11. System nach einem der vorhergehenden Ansprüche, wobei der Signalwandler (3) einen Mikrocontroller zur Steuerung des Ausgangssignals in Reaktion auf das Eingangssignal umfasst, und wobei der Mikrocontroller einen internen AD-Wandler aufweist, der in der Lage ist, Signale von dem mit dem elektrischen Signaleingang (2) verbundenen Thermoelement (16) zu lesen.

12. System nach einem der vorhergehenden Ansprüche, wobei der zweite Temperaturfühler (14) die Form eines Fleischthermometers hat.

**Revendications**

1. Système, comprenant :

- un appareil de cuisson (12), plus particulièrement un four,
- une première sonde de température,
- une deuxième sonde de température (14) pour une cuisson sous vide,
- un adaptateur électrique (13),
- l'appareil de cuisson (12) comprenant une entrée de signal configurée pour recevoir un signal provenant d'une mesure de température soit par la première sonde de température soit par la deuxième sonde de température (14),
- la première sonde de température étant une sonde à coefficient de température négatif,
- la deuxième sonde de température (14) comprenant un thermocouple (16), et
- la deuxième sonde de température (14) étant pourvue d'un diamètre d'aiguille inférieur au diamètre d'aiguille de la première sonde de température,
- l'adaptateur électrique (13) comprenant

a) une entrée de signal électrique (2) connectée à la deuxième sonde de température (14) et configurée pour recevoir au moins un signal d'entrée de tension analogique depuis la deuxième sonde de température (14),
b) une sortie de signal électrique (4) pour fournir un signal de sortie de tension analogique à l'appareil de cuisson (12),
c) un convertisseur de signal électrique (3) connecté à la fois à l'entrée de signal électrique (2) et à la sortie de sortie électrique (4) et configuré de telle manière que le signal de sortie soit inversement proportionnel au signal d'entrée.

2. Système selon la revendication 1, l'adaptateur électrique (13) comprenant en outre un générateur thermoélectrique pour générer de l'énergie électrique sur la base d'un effet thermoélectrique, notamment de l'effet Seebeck.

3. Système selon la revendication 1 ou 2, l'adaptateur électrique (13) comprenant en outre une batterie électrique (1) pour stocker de l'énergie électrique ou configuré pour être connecté à une carte de commande (17), en puisant de l'énergie du circuit de mesure sans aucune influence sur la valeur mesurée.

4. Système selon la revendication 3, dans lequel l'adaptateur électrique (13) est configuré de telle manière que la batterie (1) libère l'énergie électrique ou comprend un système qui commence à puiser de l'énergie de la carte de commande (17) lorsque la sortie de signal (4) est connectée à l'appareil de cuisson (12).

5. Système selon l'une quelconque des revendications précédentes, dans lequel l'adaptateur électrique (13) comprend en outre une coque en résine pour abriter le convertisseur de signal électrique (3), l'entrée de signal électrique (2) et la sortie de signal électrique (4) pénétrant dans la coque en résine.

6. Système selon la revendication 5, dans lequel la coque en résine est formée de manière à se connecter mécaniquement à une prise de la deuxième sonde de température (14) lorsque l'entrée de signal électrique (2) est connectée électriquement à la deuxième sonde de température (14).

7. Système selon l'une quelconque des revendications précédentes, dans lequel l'adaptateur électrique (13) comprend en outre un amplificateur opérationnel pour amplifier le signal d'entrée, le convertisseur de signal électrique (3) étant connecté électriquement à l'entrée de signal électrique (2) via l'amplificateur.

8. Système selon l'une quelconque des revendications précédentes, dans lequel l'adaptateur électrique (13) comprend en outre un circuit de traitement de signal pour filtrer et/ou élaborer le signal d'entrée, en le maintenant sous forme analogique ou en le convertissant sous forme numérique, le convertisseur de signal électrique (3) étant connecté électriquement à l'entrée de signal électrique (2) via le circuit de traitement de signal.

9. Système selon l'une quelconque des revendications précédentes, dans lequel le convertisseur de signal électrique (3) comprend un microcontrôleur pour commander le signal de sortie en réponse au signal d'entrée.

10. Système selon la revendication 9, dans lequel l'adaptateur électrique (13) comprend un amplificateur, configuré de sorte à amplifier le signal d'entrée dans l'entrée de signal électrique (2) de manière à ce que le signal injecté dans le convertisseur de signal électrique (3) soit compris entre environ 1,2 mV et environ 4 mV.

11. Système selon l'une quelconque des revendications précédentes, dans lequel le convertisseur de signal (3) comprend un microcontrôleur pour commander le signal de sortie en réponse au signal d'entrée, et dans lequel le microcontrôleur est pourvu d'un convertisseur analogique-numérique interne apte à lire des signaux issus du thermocouple (16) connecté à l'entrée de signal électrique (2).

12. Système selon l'une quelconque des revendications précédentes, dans lequel la deuxième sonde de température (14) prend la forme d'un thermomètre à viande.

FIG 1

FIG 2

FIG 3

FIG 4

GND

Analog

7,16

1

2    3    4

GND   Analog

17

FIG 5

GND

7,16

1

2    3    4

GND   Analog

17

**EP 3 517 911 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- FR 2877085 A
- US 5735605 A
- US 5705792 A1